# EUROPÄISCHE PATENTANMELDUNG

(11) **EP 1 628 179 A1**
(43) Veröffentlichungstag der Anmeldung: **22.02.2006**
(21) Anmeldenummer: 05015393.1
(22) Anmeldetag: 15.07.2005
(51) Int. Cl.: G05B 23/02

(54) **Vorrichtung und Verfahren zur Überwachung von Produktionsanlagen**

(30) Priorität: 24.07.2004 DE 102004036104
(71) Anmelder: Cognis IP Management GmbH, 40589 Düsseldorf (DE)
(72) Erfinder: Girgensohn, Sven, 40597 Düsseldorf (DE); Winterhoff, Volker, 40885 Ratingen (DE); Süssenbach, Andreas, 42657 Solingen (DE)

(57) **Zusammenfassung**

Gegenstand der Erfindung ist eine Vorrichtung zur automatischen Video- und/oder Audio-überwachung von Produktionsanlagen, bestehend aus
(a) mindestens einer Vorrichtung zur Aufzeichnung eines analogen optischen oder akustischen Signals,
(b) einem Bauteil, welches die analogen Signale in digitale Signale umwandelt und an ein Prozessleitsystem sendet, sowie
(c) ein Prozessleitsystem, welches die digitalen Signale in analoge optische oder akustische Signale umwandelt und diese einerseits an einen Monitor oder einen Lautsprecher weiterleitet und andererseits durch permanenten Vergleich von Soll- und IstWert bei Vorliegen einer Abweichung, die die vorgegebene Toleranz überschreitet, einen Alarm auslöst.

## Beschreibung

### Gebiet der Erfindung

Die Erfindung befindet sich auf dem Gebiet Prozessleittechnik und betrifft eine Vorrichtung und ein Verfahren zur Video- und Audioüberwachung von Produktionsanlagen, speziell von explosionsgeschützten Anlagen in der chemischen Industrie.

### Stand der Technik

Im Zuge der Automatisierung, aber auch Folge der zunehmenden Komplexität, werden Anlagen beispielsweise im Bereich der Chemie, Nahrungsmittelindustrie und Automobilbau vollautomatisch überwacht. Kameras beobachten neuralgische Punkte in Industrieanlagen oder Bandstraßen oder liefern Bilder aus dem Inneren von Reaktoren. Mikrophone zeichnen parallel dazu den Geräuschpegel auf. Intelligente Software erkennt Abweichungen vom Istwert, beispielsweise eine von der Norm abweichende Form, Dynamik oder Geräusch und löst dadurch eine Aktivität aus. Im einfachsten Fall wird ein Alarm betätigt, in spezielleren Fällen wird ein Mechanismus in Gang gesetzt. Beim maschinellen Schälen von Krabben beispielsweise, überwacht eine Kamera die Bandstraße; weicht eine Krabbe von der vorgegebenen Form ab, wird ein Druckluftmechanismus ausgelöst, der das fehlerhafte Produkt entfernt. Im Bereich der chemischen Industrie ist die Problematik in der Regel etwas einfacher gelagert : hier geht es eher darum, Anlagenteile auf Leckagen oder Rauchentwicklung zu überprüfen oder zu überwachen, dass ein Rührwerk oder eine Pumpe fehlerfrei läuft. In der Praxis geschieht dies durch Kameras, die ein analoges Signal an einen Computer senden, der einerseits das Livebild auf einen Monitor überträgt und andererseits wie ein MSR-System Soll- und Ist-Zustand vergleicht und bei einer Abweichung, die die Toleranz überschreitet, ein Signal, in der Regel einen Alarm auslöst. Ist es aus praktischen Überlegungen erforderlich, dass sich der Monitor innerhalb der Produktionsanlage und nicht in einem entfernten Verwaltungsgebäude befindet, so ist dieses Verfahren mit einem erheblichen Nachteil verbunden : die gesamte Ausgestaltung der Bauteile, insbesondere der Monitore, muss explosionsgeschützt sein, was mit erheblichen Kosten verbunden ist.

Die Aufgabe der vorliegenden Erfindung hat somit darin bestanden, eine Vorrichtung und ein Verfahren zur automatischen Video- und/oder Audioüberwachung von Produktionsanlagen zur Verfügung zu stellen, die frei von den Nachteilen des Stands der Technik sind. Insbesondere sollte die technische Lehre das Problem der Bereitstellung zusätzlicher teurer, gegebenenfalls sogar explosionsgeschützter Bauteile in der Anlage auf einfachem Wege lösen.

### Beschreibung der Erfindung

Gegenstand der Erfindung ist eine Vorrichtung zur automatischen Video- und/oder Audioüberwachung von Produktionsanlagen, bestehend aus
(a) mindestens einer Vorrichtung zur Aufzeichnung eines analogen optischen oder akustischen Signals,
(b) einem Bauteil, welches die analogen Signale in digitale Signale umwandelt und an ein Prozessleitsystem sendet, sowie
(c) ein Prozessleitsystem, welches die digitalen Signale in analoge optische oder akustische Signale umwandelt und diese einerseits an einen Monitor oder einen Lautsprecher weiterleitet und andererseits durch permanenten Vergleich von Soll- und Ist-Wert bei Vorliegen einer Abweichung, die die vorgegebene Toleranz überschreitet, einen Alarm auslöst.

Ein weiterer Gegenstand der vorliegenden Erfindung betrifft ein Verfahren zur automatischen Video- und/oder Audioüberwachung von Produktionsanlagen, bei dem
(a) mindestens eine Kamera oder Mikrophon analoge optische oder akustische Signale aufzeichnet,
(b) die analogen Signale an ein Bauteil sendet, welches diese in digitale Signale umwandelt und an Prozessleitsystem übermittelt,
(c) das Prozessleitsystem die digitalen Signale wieder in analoge optische oder akustische Signale umwandelt und diese einerseits an einen Monitor oder Lautsprecher weiterleitet und andererseits permanent die Ist-Werte mit vorgegebenen Sollwerten vergleicht und bei einer Abweichung, die die vorgegebene Toleranz überschreitet, einen Alarm auslöst.

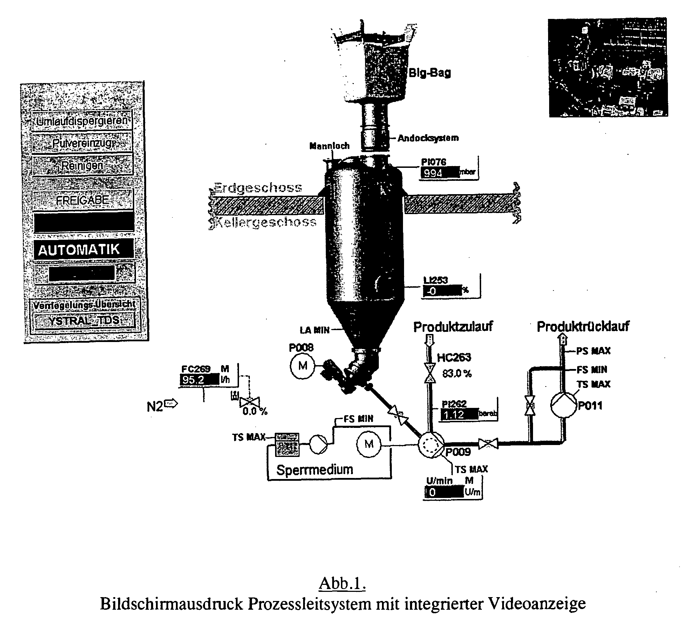

Zentrale und dezentrale Prozessleitsysteme haben die Aufgabe, Produktionsanlagen durch Vergleich von Ist- und Sollwert einer Vielzahl von Messwerten zu steuern und bei Abweichungen durch automatische Bedienung der entsprechenden Stellglieder auszugleichen bzw. den Istwert wieder auf den Sollwert zurückzuführen. Diese Technologie hat seit den 70er Jahren in praktischen allen Bereichen der Produktion Einzug gehalten und ist hinreichend etabliert. Da sich die Leitstände regelmäßig in oder in nächster Nähe zur Produktionsanlage befinden, erfüllen sie auch alle Anforderungen beispielsweise an den Explosionsschutz. Der vorliegenden Erfindung liegt die Überlegung zugrunde, optische oder akustische Signale nicht anders zu behandeln als Messwerte zu Druck oder Temperatur, d.h. die analogen Werte zu digitalisieren und direkt in das Prozessleitsystem einzuspeisen, wo einerseits das - optische - Signal in Echtzeit auf dem Monitor wiedergegeben wird (also analog beispielsweise einer Temperaturanzeige) und andererseits jede Abweichung, die über die vorgegebene Toleranz hinausgeht, zur Auslösung eines Alarms führt. Die Kombination aus bekannter Video- bzw. Audioüberwachung einerseits und Prozessleittechnik andererseits führt dazu, dass für die Überwachung von Produktionsanlagen keine zusätzlichen - teuren - Bauteile wie beispielsweise explosionsgeschützte Bildschirm benötigt werden, sondern statt dessen nach Digitalisierung der Information bestehende Prozessleittechnik und deren Bauteile mitgenutzt werden können. Zur Illustration zeigt Abb. 1 den Bildschirmausdruck mit eingeblendeter Videoanzeige.

Ein geeignetes System zur Visualisierung von Videosignalen einer Analogkamera, die Digitalisierung der aufgezeichneten Daten für die Auswertung mit Hilfe eines Video-Servers sowie die Anzeige auf separaten Anzeigesystemen, speziell Monitoren, ist aus dem Stand der Technik bekannt und wird beispielsweise von der Firma ASE unter der Bezeichnung "Visor" im Markt angeboten.

Auch entsprechende Prozessleitsysteme mit auf Windows basierenden Anzeigesystemen zur Visualisierung und Steuerung von Prozessgrößen, sowie explosionsgeschützte Leitstände sind im Markt bekannt und werden beispielsweise von der Firma Emerson unter der Bezeichnung "Delta-V" im Markt vertrieben.

Die Übertragung der digitalen Signale vom Video- oder Audioserver zum Prozessleitsystem kann beispielsweise durch Ethernet-Technik erfolgen; die Einspeisung des Signals in das System erfordert eine Anpassung der Software, die aber vom Fachmann im Rahmen der routinemäßigen Optimierung vorgenommen werden kann.

## Patentansprüche

1. Vorrichtung zur automatischen Video- und/oder Audioüberwachung von Produktionsanlagen, bestehend aus
(a) mindestens einer Vorrichtung zur Aufzeichnung eines analogen optischen oder akustischen Signals,
(b) einem Bauteil, welches die analogen Signale in digitale Signale umwandelt und an ein Prozessleitsystem sendet, sowie
(c) ein Prozessleitsystem, welches die digitalen Signale in analoge optische oder akustische Signale umwandelt und diese einerseits an einen Monitor oder einen Lautsprecher weiterleitet und andererseits durch permanenten Vergleich von Soll- und Ist-Wert bei Vorliegen einer Abweichung, die die vorgegebene Toleranz überschreitet, einen Alarm auslöst.

2. Verfahren zur automatischen Video- und/oder Audioüberwachung von Produktionsanlagen, bei dem
(a) mindestens eine Kamera oder Mikrophon analoge optische oder akustische Signale aufzeichnet,
(b) die analogen Signale an ein Bauteil sendet, welches diese in digitale Signale umwandelt und an ein Prozessleitsystem übermittelt,
(c) das Prozessleitsystem die digitalen Signale wieder in analoge optische oder akustische Signale umwandelt und diese einerseits an einen Monitor oder Lautsprecher weiterleitet und andererseits permanent die Ist-Werte mit vorgegebenen Sollwerten vergleicht und bei einer Abweichung, die die vorgegebene Toleranz überschreitet, einen Alarm auslöst.
